# EUROPEAN PATENT APPLICATION

(11) **EP 3 203 601 A1**
(43) Date of publication of application: **09.08.2017**
(21) Application number: 16154715.3
(22) Date of filing: 08.02.2016
(51) Int. Cl.: H02J 9/06, B63H 23/00, H02J 3/38

(54) **POWER CONTROL SYSTEM**

(71) Applicant: Siemens Aktiengesellschaft, 80333 München (DE)
(72) Inventor: Eide, Lars, 7022 Trondheim (NO)
(74) Representative: Maier, Daniel Oliver

(57) **Abstract**

A safety critical equipment power control system comprises two or more switchboards (2, 3, 50) configured to be connected to one another by a bus tie breaker (4, 55), normally open during safety critical operation. At least one of the switchboards (2, 3, 50) further comprises a connector (5) to at least one power source (11, 12, 13, 14). Two or more of the switchboards comprise a connector to at least one consumer (10, 16, 18, 20). The system further comprises one or more converters (25) whereby the switchboards are connected to one another, such that the at least one power source supplies power directly, or through one or more converters, to all of the switchboards in safety critical operation. The one or more converters (25) include an energy storage unit (37).

## Description

This invention relates to a power control system, in particular for a safety critical application, such as a diesel electric offshore vessel using dynamic positioning, vessels operating in narrow waters, or vessels carrying loads that depend on uninterrupted power supply, such as live fish carriers.

When providing power for safety critical applications in a system it is typically necessary to have more than one power source, or prime mover, such as a diesel generator, or gas turbine in operation, even if only one power source would be sufficient for the load requirement.. For example, vessels in the offshore industry are subject to strict regulations regarding availability of propulsion power in case of a single fault when operation in dynamic positioning (DP). Other examples are live fish carriers that must ensure that oxygen provision and water circulation is maintained, or vessels manoeuvring in restricted conditions, such as ports, or rivers, which cannot risk losing power for propulsion. Typically, this leads to inefficient operation of diesel generators and duplication of equipment, adding to cost and maintenance requirements.

In accordance with a first aspect of the present invention, a safety critical equipment power control system comprises two or more switchboards configured to be connected to one another by a bus tie breaker, normally open during safety critical operation, at least one of the switchboards further comprising a connector to at least one power source; two or more of the switchboards comprising a connector to at least one consumer; the system further comprising one or more converters whereby the switchboards are connected to one another, such that the at least one power source supplies power directly, or through one or more converters, to all of the switchboards in safety critical operation; and wherein the one or more converters include an energy storage unit.

In the event of a fault during safety critical operation, at least one consumer on one switchboard continues to receive power, either from the power source, or from the energy storage unit, without closing the bus tie breaker. This reduces the chance of a complete power blackout as compared with closing the bus tie breaker to maintain supply between the switchboards.

Preferably, the safety critical equipment comprises one of an offshore supply vessel, a vessel capable of dynamic positioning operation, a live cargo carrier, or a fish farm.

Preferably, the consumers comprise at least one of thrusters, propulsion units, or pumps.

Preferably, the converter comprises an AC to DC to AC converter.

Preferably, the converter comprises a plurality of connector arms, each arm connectable to a different switchboard.

Preferably, the connector arm comprises a filter and an AC to DC converter. Preferably, the connector arms are coupled to a dc link in the converter.

Preferably, each consumer on the dc link of the converter is connected via a fuse.

Preferably, the power source comprises a prime mover.

The prime mover may comprise one of a diesel engine, or gas turbine and typically, the prime mover supplies a generator coupled to the switchboard.

Preferably, the system further comprises an additional consumer connected to the dc link of the converter.

The additional consumer may comprise an azimuth thruster. In normal operation, the azimuth thruster is supplied from any connected switchboard with a power source, but in the event of a fault, it can be supplied by the energy storage unit.

In accordance with a second aspect of the present invention, a method of controlling a safety critical equipment power supply comprising two or more switchboards configured to be connected to one another by a bus tie breaker, normally open during safety critical operation, the method comprising connecting a power source to one switchboard of the vessel; coupling the switchboards together via one or more converters; connecting an energy storage device to a dc link of the converter; during safety critical operation, supplying power from the power source on the one switchboard directly to one or more consumers connected to that switchboard; through the converter, supplying energy to one or more consumers connected to the other switchboards; supplying power from the power source to the energy storage unit; and, in the event of a fault on one of the switchboards, disconnecting that switchboard from the converter.

In one embodiment, the method further comprises, in the event of a fault in the switchboard to which the power source is connected, after disconnecting the switchboard from the converter, supplying power to consumers on the second switchboard from the energy storage unit.

The method may further comprise, in the event of a fault in a switchboard to which the power supply is not directly connected, after disconnecting the switchboard from the converter, terminating the supply of power to the energy storage unit.

The method may further comprise, in the event of a fault in the converter, disconnecting the switchboards from the converter.

In accordance with a third aspect of the present invention, a method of operating a vessel, the vessel comprising an electric propulsion system comprising two or more switchboards; one or more converters including an energy storage unit; at least one power source; and a plurality of thrusters; wherein each of the thrusters is connected to a switchboard; wherein the at least one power source is connected to a switchboard; and wherein the two or more switchboards are connected together via the one or more converters; the method comprising supplying power from the at least one power source to its switchboard and from its switchboard directly, or via the converter, to thrusters; monitoring the system for a fault; in the event of a fault in the system, disconnecting a switchboard, or converter, associated with the fault; and maintaining the supply to the remaining switchboard from the power source, or the energy storage unit.

Operating the system in this way allows the vessel to maintain its position on the sea, even if a fault occurs that disconnects the power source from some of the thrusters, long enough for action to be taken, such as starting up an alternative power source. The vessel may be engaged in dynamic positioning operation, or manoeuvring in a narrow channel.

An example of a power control system in accordance with the present invention will now be described with reference to the accompanying drawings in which:
Figure 1 illustrates a conventional power control system, for use in a vessel engaged in DP operation;
Figure 2 illustrates an example of a power supply control system according to the invention, for normal operation of a safety critical system;
Figure 3 illustrates operation of a power control system according to the invention, in a first fault condition;
Figure 4 illustrates operation of a power control system according to the invention, in a second fault condition;
Figure 5 is illustrates operation of a power control system according to the invention in a third fault condition; and,
Figure 6 is a flow diagram of a method of operating a power control system according to the present invention;
Figure 7 illustrates in more detail, converters for use in the system of the present invention.

The present invention addresses the problem of efficient operation and high maintenance costs for power supply systems in safety critical applications which use electric power, usually without reliable access to a mains supply. The electric power for the safety critical system is provided by a prime mover, typically, a diesel engine, or a gas turbine and associated generators. Equipment running on an offshore platform, a vessel at sea, or maneuvering in port, or through narrow passages, a vessel carrying live aquatic cargo, or equipment on land in remote locations far from the main grid are most likely to need this type of power supply system.

A typical application of the present invention is in vessels with diesel electric power systems, particularly diesel electric propulsion systems, such as a diesel electric offshore supply vessel, operating in dynamic positioning (DP) mode. For safety reasons, when the vessel is operating in DP mode, a minimum of one diesel engine on each side of the bus tie breaker is running and the bus tie breaker is open, so that failure of one engine, or any other faults, on one switchboard does not lead to a complete blackout of supply to the propulsion system. However, as a consequence, this means that the diesel engines in operation are running at a relatively low load and hence have a relatively high specific fuel consumption (gram diesel per produced kWh) compared to a diesel engine running at higher load, or close to full load.

When vessels operate in DP mode, they have to comply with specific rules, typically set by classification societies, or government regulations, deemed to achieve safe operating practices. In some cases, there is a requirement that power supplied in the case of a fault in the primary source of power is made available from a prime mover, e.g. a diesel engine, that is already running and connected, sometimes referred to as "spinning reserve". As mentioned above, the consequence of this rule is that the diesel engines are running at a relatively low load and correspondingly high specific fuel consumption.

Another example is in farming of aquatic creatures, such as fish or prawns, with fish tanks, either on shore, or in the water, but located relatively close to the shore. The shore locations may only be accessible by sea and not have any access to the main grid. Automated feeders may be located on shore, or on floating barges close to the fish tanks, whether shore based, or sea based tanks and the feed pumped into the fish tanks as required. Oxygen supply and water quality is maintained by pumping systems. Even for aquatic creatures farmed in lochs, or sea locations, such pumping systems are used. There may also be a need for the live aquatic cargo to be transported in live cargo carriers and the oxygen supply to the cargo must be maintained in transit. All of these services are typically provided by diesel generators, on the barge or vessel, or on the shore. Other vessels may view propulsion as safety critical when passing through narrow passages or channels of a river, particularly with strong tides or currents, or when docking and need to reduce the risk of failure of the power supply during operation.

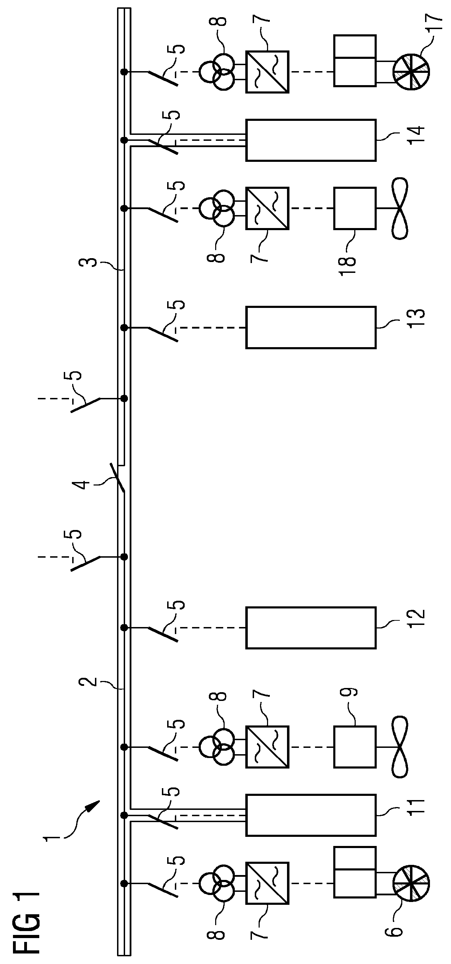

An example of an arrangement for an offshore supply vessel, with conventional diesel electric propulsion operating a spinning reserve is shown in Fig.1. The example of Fig. 1 has a main switchboard 1, in this case operating at 690V, 60Hz. The switchboard 1 is typically split into two parts, switchboards 2, 3 connected by a bus tie breaker 4. Often, these two parts are referred to as port and starboard side switchboards, but for the purpose of this application, the first and second sides of a two part switchboard divided by a normally open breaker will be referred to as side A and side B, irrespective of the actual location of the two parts with respect to port and starboard of the vessel. The bus tie breaker 4 will normally be closed in non critical operations, but in critical operations like DP operation the bus tie breaker is normally open to avoid the risk of a total blackout in a worst case fault situation. Switches 5 allow equipment to be connected to one or other side 2, 3 of the main switchboard 1. Typically, the connections 5 are to generators, or thrusters, for example tunnel thrusters, or propulsion units, or to various onboard consumers (not shown). For example, on the side A main switchboard 2, a first bow thruster 6 is connected, via an AC to AC converter 7, converting from fixed frequency AC to variable frequency AC, and via a transformer 8, to the switchboard 2. Similarly, a transformer 8 and AC to AC converter 7 connect a drive system 9 and propeller, so that they can be supplied from the switchboard 2. In non critical operations one or more diesel generators are connected to the switchboard 1 and the bus tie breaker 4 is closed. As an example this could be two generators 11, 12 connected by switches 5 to the switchboard 2. These generators will then provide power to the propulsion system 9 and thruster 6 on side A, and since the bus tie breaker 4 is closed, also to the propulsion system 15 and thruster 7 on side A. In case generator 11 fails, the other generator 12 continues to provide power to the propulsion systems and thrusters. However, in the case of a short circuit on switchboard side A, both generators will trip and cause a total blackout. In critical operations such as when operating in DP mode, typically as a minimum two diesel engines will be running and be connected to the main switchboard 1. In order to achieve the desired level of redundancy, there must be at least one engine 11, 13 running on each side of the bus tie breaker 4. The bus tie breaker is normally open in order to exclude the possibility that a single fault on one side affects the other side. If the total load is higher than can be supplied by a single diesel engine, then all four diesel engines 11, 12, 13, 14 will be running, i.e. two on each side of the bus tie breaker 4.

Assuming a single fault in the system, the rules require in this case that the vessel does not lose more than 50% of its capacity. For example, if one of the diesel generator sets trips, the remaining generator set is required to have sufficient available power for the ship to maintain position. Alternatively, if a short circuit occurs in one of the main switchboards 2, then the vessel is required to be able to maintain its position using the diesel generator 13, 14 and thrusters 16, 17 connected to the other switchboard 3. The nature of these requirements means that the initial load on each diesel engine 11, 12, 13, 14 before the fault occurs will be less than 50%, and very often much less than 50%. This low load is a problem for efficient operation of the engines and may also lead to an increase in the maintenance requirement.

A further requirement of the rules is that the remaining available power after a fault is uninterrupted, which is why the spinning reserve is used. Starting up a stand by diesel engine in order to compensate for loss of a diesel engine is not permitted, nor would switching over to another power supply for a specific consumer like a propulsion drive be permitted. All of these requirements are met by the conventional solution, but if one diesel engine would be sufficient for the required load, but for safety reasons two diesel engines have to be run, then the diesel engines have to be run at low load, increasing fuel consumption and maintenance costs.

In order to reduce fuel consumption and reduce maintenance costs, whilst still addressing the safety concerns for safety critical operation, the present invention proposes a design which allows the power supply system to operate with different arrangements of running engines, for example, only one engine, or two engines on one side and one on the other, or two engines on the same side. In all these examples, the bus tie breaker is normally open during the safety critical operation and the system is able to maintain an acceptable level of safety. For the aquatic farming, or live aquatic carriers, whenever there are aquatic creatures, the invention allows operation with only one generator (or fewer than all available generators) running, with an acceptable level of safety.

For the DP operation example, some alternative designs have proposed operating vessels with the bus tie breaker 4 closed during DP operation, but this does not address the problem of low load on the diesel engines because there will still be a requirement to operate with a minimum of two diesel engines. Running two diesel engines and the bus tie breaker closed may avoid a blackout on one of the switchboards, if one engine fails, but if there is a short circuit in one of the main switchboards the system depends on the selectivity between the bus tie breaker and the generator feeder breaker to prevent a full blackout, which would be the case if the selectivity fails. So the present invention provides a design where the bus tie breaker is open during DP operation and does not rely on the selectivity and opening the bus tie breaker quickly enough to prevent a total power failure. The selectivity concerns and risk of a full blackout are equally applicable for other safety critical operations, such as vessels maintaining their station manually, vessels negotiating a narrow channel, or maintaining supply of oxygen to fish in a fish farm.

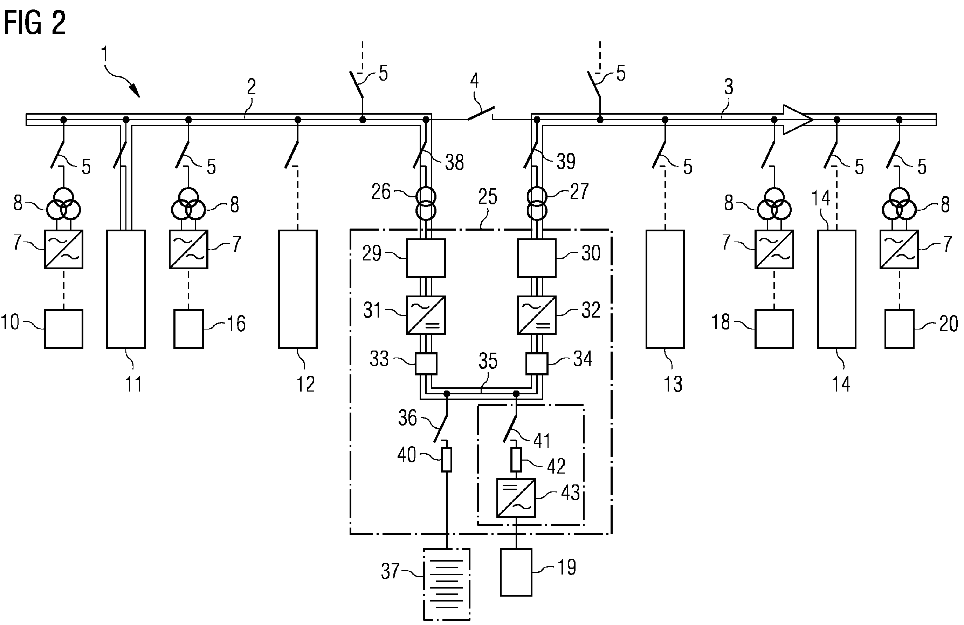

Fig. 2 illustrates a first example of a power supply system for a safety critical application according to the present invention having a switchboard arrangement incorporating a converter system 25. For the safety critical operation the bus time breaker 4 remains open. Only for non-critical operation is closing the bus tie breaker considered. Components which are the same as in the Fig.1 example have the same reference numbers. Fig.2 illustrates normal operation with one engine running, in this case a diesel generator 11, but the system and method is applicable with any prime mover suitable for the particular use, for example a gas turbine, or petrol generator, or a fuel cell. The generator provides power to approximately 50% of the total load directly through the switchboard 2 to the consumer 10, 16 on the same side as the diesel engine 11. For a fish farm, the consumer 10, 16 may be an oxygen pump, water pump, or feed pump. For a vessel, the consumer may be a thruster and propulsion system. The remaining part of the total load is connected to the side B switchboard 3 on the other side of the bus tie breaker 4 via the converter system 25 and this load 18, 20, for example pumps, thrusters, or propulsion systems is also powered from the diesel engine 11.

Converter 25 comprises a connector arm for each switchboard. The connector arm on each side of the converter is provided with a transformer 26, 27, if required, connected via switches 38, 39 to the switchboard 2, 3 on that side. Within the converter 25, the components of the connector arms comprise a filter circuit 29, 30, an AC to DC converter 31, 32 and optional fuses 33, 34. The two connector arms on the sides of the converter are connected together by a DC link 35. The AC supply on the switchboard 1 may be chosen according to the specific requirement of the loads that it services, which may be in the range of 400V to 11kV, perhaps even as low as 200V and according to the country of operation, or manufacture run at 50Hz or 60Hz or even at variable frequency. In an example, where the main switchboard voltage is 690V and 60Hz, and the converter also operates at 690V, then the transformer 26, 27 is not essential as it is effectively transforming the AC supply between the main switchboard voltage of 690Vand the converter voltage, also at 690V. For a lower voltage converter, e.g. 400V, then the transformer would be required for a 690V main switchboard, but again is optional if the main switchboard is operating at the same voltage, in that case, also 400V. Assuming the voltage is supplied from the side A main switchboard to the converter, then the voltage is converted back to the side B main switchboard voltage at the transformer 27 so that it can be used to power the consumers connected to the side B switchboard 3.

A switch 36 allows an energy storage unit 37, such as a battery to be connected to the dc link 35 of the converter, typically via a fuse 40. The battery typically has a capacity equivalent to one generator set, so for a 1MW generator set, 1MW peak power is required of the battery. The time for which the battery must continue to power the consumers, if the main power source has failed, should at least cover the time to start up another generator, perhaps 1 minute, but preferably several minutes, or even 10s of minutes depending on customer and/or class requirements and the application for which the power supply is being provided. In addition the invention may be combined with one or several separate inverters for specific loads fed by the converter, as indicated by the inverter components 42, 43 and associated load 19. For example, the converter 25 may feed a forward azimuth thruster on a vessel. Many offshore vessels have a combination of one retractable azimuth thruster 19 and two tunnel thrusters 6, 17 and by using the converter 25, this gives better performance in the role of a DP vessel because the converter acts as a redundant dual feed converter for the forward azimuth. In this case a switch 41 allows a retractable azimuth thruster 19 to be connected to the link 35 via a fuse 42 and DC to AC converter 43. The battery is generally kept fully charged and available during normal operation, ready to take over if required in the event of a failure. The battery may also be used to perform peak shaving during normal operation.

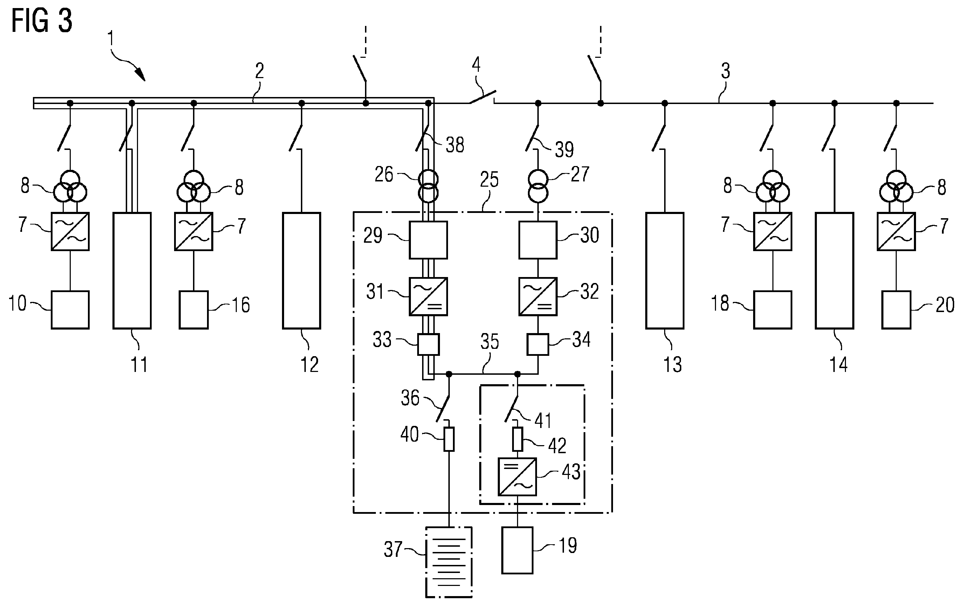

Figure 3 illustrates the effect of a short circuit occurring on the side B switchboard 3. The connector arm 30, 32, 34 feeding the side B switchboard 3 provides the maximum short circuit current available from the converter 25 and causes a trip after a pre-defmed time if the fault is not cleared, opening switch 39. Opening switch 39 disconnects the side B switchboard 3 from the transformer 27 and converter 25. The converter connector arm 29, 31, 33 connected to the side A switchboard 2 now acts as an AC/DC converter and may stop feeding energy from the generator 11 into the DC link to the energy storage unit 37 based on the DC link voltage and other monitored/detected parameters, such as battery charging current. Thus, in the worst case, the consequence is a blackout on side B switchboard, but the side A switchboard remains unaffected. Further actions as a consequence of the initial fault, such as starting stand by generators, largely take place under control of an overriding control system, such as the power management system of the vessel, but connection and disconnection of the converter is controlled by the converter itself, in response to detection of a fault.

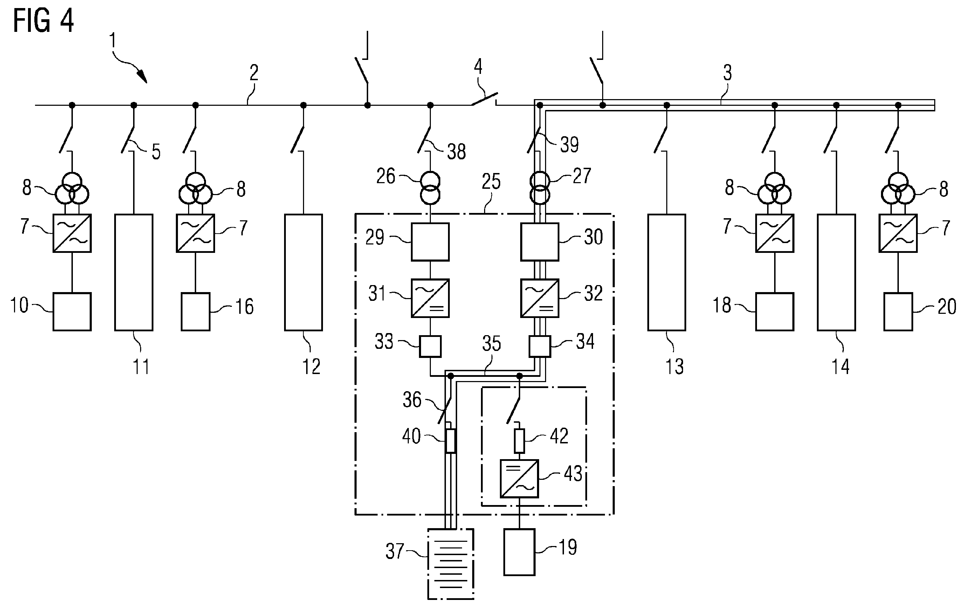

Figure 4 shows the effect of a short circuit occurring on the side A switchboard 2 to which the one operating generator 11 is connected, causing that generator to trip and disconnect from the switchboard 2. Thereafter, switch 38 is opened to disconnect the side A switchboard 2 from the transformer 26 and converter 25. The energy storage unit 37 then supplies power via the DC link of the converter system and the converter connector arm 30, 32, 34 will continue to feed the side B switchboard without interruption. Further actions as a consequence of the initial fault, such as starting stand-by generators, are mainly controlled by the power management system. In this case, typically generator 13 and/or 14 is started and connected to the side B switchboard. After the connection of the generator to side B, , switch 38 may be closed again and the converter 25 can try to power up side A switchboard to check if the fault has cleared. If the fault has cleared, the supply provided from the new generator 13, 14, through the converter 25, can be established without further delay.

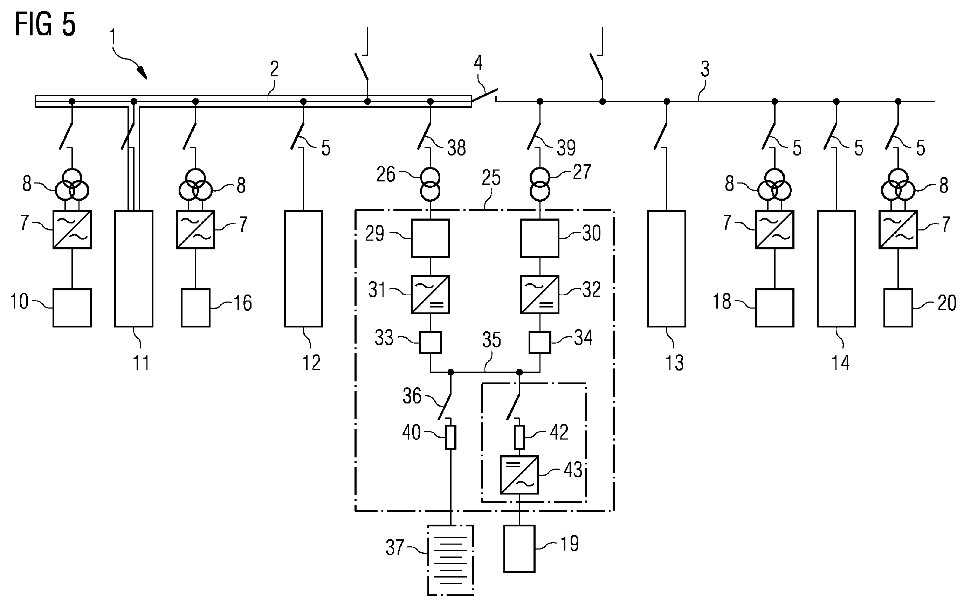

Fig.5 illustrates an example in which the converter controller detects a fault in the converter 25. This may be a short circuit on the DC link 35 of the converter 25, so all the fuses 33, 34, 40, 42 connected to the DC link 35 blow and as a consequence the power supply to side B 3 is interrupted, but side A 2 is not affected and continues operation powered from the diesel generator set 11. The entire converter 25 may also trip and open the feeder breaker 38 from side A and breaker 39 from side B.

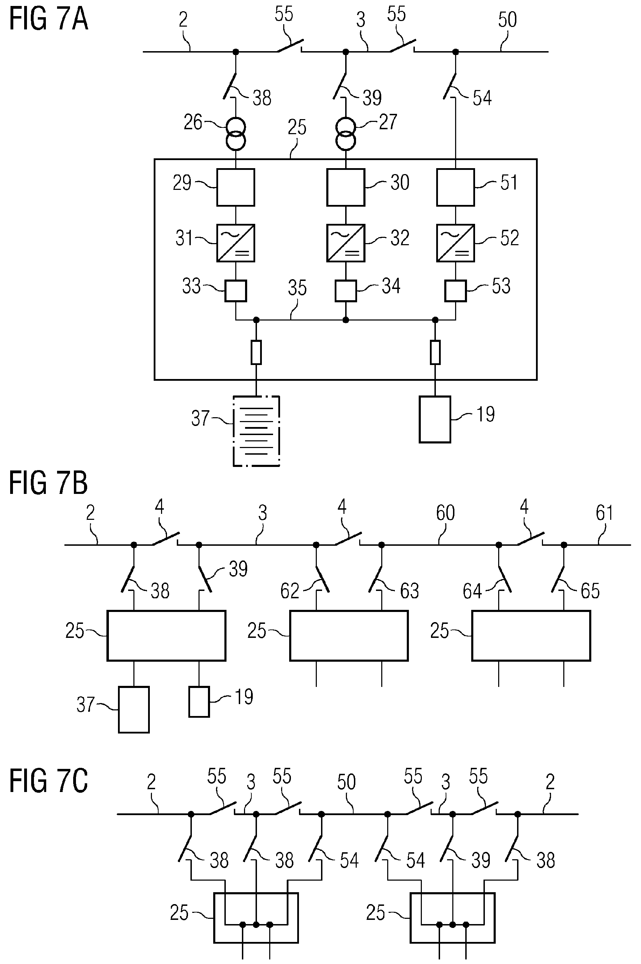

The detailed examples are described for two switchboards, but the invention is equally applicable to more than two switchboards. For more than two switchboards, the converter has an additional connector arm for each additional switchboard, as illustrated in Fig.7a for a three switchboard connector. In this example, two of the switchboards 2, 3 operate at a different voltage to that of the converter 25 and are provided with transformers 26, 27 as in the Fig.2 example, whereas one of the switchboards 50 is at the same voltage and so does not require a transformer. The switchboards are connected to the converter by switches 38, 39, 54, via the transformers 26, 27 or directly as appropriate. Within the converter 25, a converter arm for each switchboard comprises a filter 29, 30, 51, AC to DC converter 31, 32, 52 and optional fuse 33, 34, 53 to connect to the dc link 35. The bus tie breakers 55 are normally open, but are able to connect one or more of the switchboards 2, 3, 50 together, when the system is providing power for non-critical operation. An alternative arrangement is to have, a series of switchboards 2, 3, 60, 61 connected together via converters 25 by switches 38, 39, 62, 63, 64, 65, but this is more costly, as for each additional converter, only one more switchboard is connected. An example of this is shown in Fig.7b. As before, there is a normally open bus tie breaker 4 between each switchboard, in parallel with the converter 25. During critical operation, the bus tie breakers 4 are kept open, even if a converter 25 is disconnected due to a fault. Using multiple converters, each with multiple connector arms may be preferred, as shown in Fig.7c. For simplicity, the detail of the converters 25 and other connections has been omitted, but the converters, like in the Fig.7a example have a connector arm with its components for each switchboard 2, 3, 50, 60, 61 and the switchboards have a normally open bus tie breaker 55 between one another. A transformer is provided for each converter arm if that switchboard operates at a different voltage to the converter. Connections to the energy storage unit 37 and optional consumers 19 directly connected to the converter are as described for previous examples.

The invention enables safety critical operation to be carried out with only a single prime mover, for example, one diesel engine, running and the bus tie breaker open, or to reduce the total number of engines running, for example three instead of four. This is particularly useful for vessels engaged in critical operations, such as DP operation, or navigating narrow channels, or maintaining oxygen supply to live cargo. Operation, in such safety critical applications, with the bus tie breaker closed, is not usual, or is actively discouraged. In safety critical operation the two or more main switchboards 2, 3 are connected to a AC/DC/AC converter system 25 where the energy from a single diesel engine 13 running on one side of the bus tie 4 is transferred to a load 10, 16 on the other side via the converter system 25 and thus feeds the load 10, 16 on this side. The converter system includes an energy storage unit 37 that may be used as an energy source to feed a part of the system that has not been disconnected after a fault occurs. The energy source supplies energy via the same converter system 25 without interruption in case of a fault.

A short circuit somewhere close to the feeder breaker on side A results in the feeder breaker to the converter tripping due to the short circuit current coming from the generator, but if the selectivity fails and the generator breaker also trips leading to a black out on side A, the power supply to side B is not affected. The advantages of the present invention include a reduction in fuel consumption and greenhouse gas emissions because the equipment is able to be operated with one prime mover only instead of two and with a 50% reduction in engine running hours, so reducing the frequency of maintenance.

The converter components 29, 31, 30, 32, 51, 52 may be embodied as an active interface module and an active line module, working in combination with the transformers 26, 27, if transformers are required for voltage matching. On the generator side components 29, 31 act as a rectifier, controlling the DC link voltage and hence also the battery charging level, while the components 30, 32, 51, 52 on the other side of the converter act as a power supply to the other switchboards 3, 50. The energy storage unit 37 is chosen to have a capacity appropriate for the particular energy requirement. Connecting two or more generator systems or switchboards together and powering all of the switchboards 2, 3, 50 from a prime mover on one other switchboard via the converter, along with energy storage, allows the converter to act as a large scale UPS, resulting in safe operation in DP mode or similar with only one generator running. There are also benefits, even if one switchboard is running all of its generators and the other switchboard is running some, but not all, of its generators. In case of a fault, the converter and the energy storage unit are able to take over and avoid the need to start an additional generator, if the fault can be fixed in the available time. The system is suitable for retrofitting, or for installing in new- build equipment. In both cases, savings in maintenance costs and operational efficiency may be achieved.

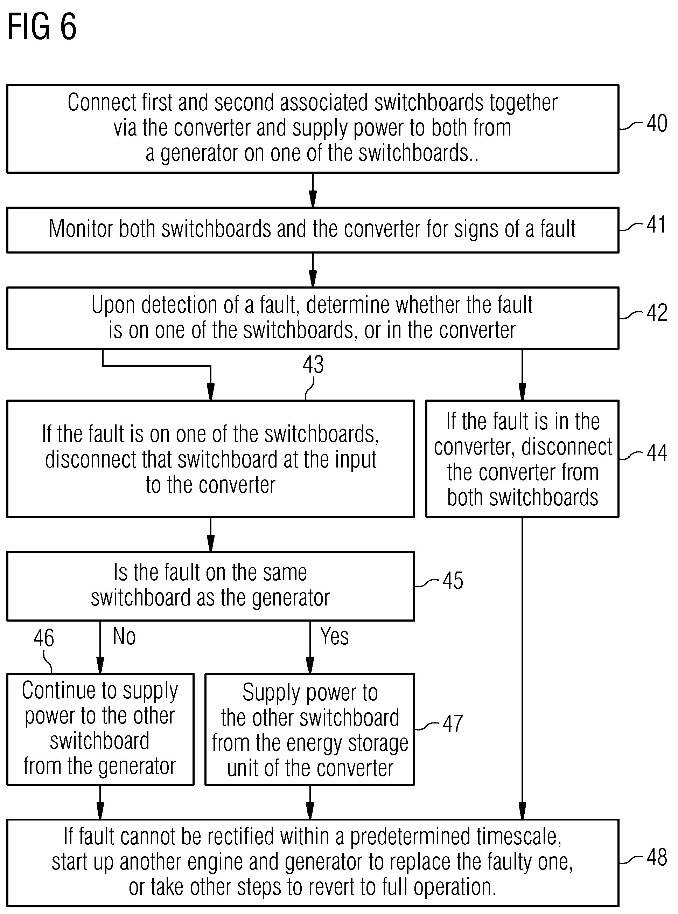

Fig.6 is a flow diagram illustrating the various modes of operation for a method of controlling a power supply in accordance with the present invention. The system is set up by connecting 40 two or more switchboards 2, 3, 50, 60, 61 to the converter 25 and the power management system determining which engine and generator set 11, 12, 13, 14 connected to one of the switchboards 2, 3, 50, 60, 61 will provide the power supply for the consumers 10, 16, 18, 20 on the switchboards, such as thrusters and propulsion systems, or pumps, or a consumer 19 connected to the converter. Monitoring 41 of the voltage on the switchboard sides and in the converter 25 itself for any sign of a fault may be carried out by the controller in the converter. Typically, the vessel power management system and vessel automation system monitor the switchboards and loads on those. A fault may occur on the switchboard 2, 3 itself, in the converter 25, or in the engine or generator 11, 12, 13, 14 of the power source, or in one of the consumers 10, 16, 18, 20.

If a fault is detected, the controller determines 42 the location of the fault, i.e. whether it is on the switchboard, or in the converter and certain parts of the system are disconnected as a result. If the fault is on one of the switchboards, detected as the voltage dropping below a predetermined value for a certain period, of the order of milliseconds, the controller does not need to determine whether it is in the switchboard itself, or in a generator, or consumer, connected to that switchboard, but simply causes the connection between the switchboard where the fault is and the converter to be broken 43. Typically, the switch 38, 39, 54 connecting the switchboard, on the side where the fault is, to the transformer of the converter is opened by the converter producing its maximum short circuit current on the same side of the converter as the switch. A check 45 is made by the power management system to determine whether the fault is on the same switchboard as the generator, or on the other switchboard.

If the fault is on another switchboard 46, then the power source continues to supply power to its switchboard and those consumers, such as pumps, thrusters or propulsion units, connected to that switchboard continue to operate. If the fault is a short circuit, the converter will provide maximum short circuit current to this switchboard and if the fault is not cleared within a predefined time, the converter will open the switch feeding this switchboard.

If the fault is on the same switchboard as the power source 47 which had been powering consumers, such as the pumps, or the thrusters and propulsion units, connected to both switchboards, then the breaker switch connecting the converter to this switchboard is opened, and the power supply to the other switchboards connected to the converter is maintained without interruption using the energy storage unit 37 of the converter 25 providing stored power to the non-faulty switchboard. There is no delay in the supply. As soon as the switch 38 breaks the connection to the faulty switchboard, energy is supplied from the energy storage unit instead. Thus, the converter acts as an uninterruptable power supply, for as long as it has capacity.

If the fault is in the converter itself, or the energy storage unit 27, or in the consumer 19 connected to the dc link 35 of the converter, then both switches 38, 39 are opened 44 to disconnect the converter from the switchboards, and the power supply to the switchboards powered by the converter before the fault will be interrupted. However, the power supply from the generator to the switchboard where the generator is connected will not be affected. This generator will continue to supply power to its switchboard and those consumers, such as pumps, thrusters and propulsion units, connected to that switchboard will continue to operate without interruption. Where ever the fault is, this needs to be dealt with either by starting up a new generator 48 and reconnecting the parts which have suffered a blackout, or repairing the parts which have caused the fault, so that they can be brought back into use.

## Claims

1. A safety critical equipment power control system comprising two or more switchboards configured to be connected to one another by a bus tie breaker, normally open during safety critical operation, at least one of the switchboards further comprising a connector to at least one power source; two or more of the switchboards comprising a connector to at least one consumer; the system further comprising one or more converters whereby the switchboards are connected to one another, such that the at least one power source supplies power directly, or through one or more converters, to all of the switchboards in safety critical operation; and wherein the one or more converters include an energy storage unit.

2. A system according to claim 1, wherein the safety critical equipment comprises one of an offshore supply vessel, a vessel capable of dynamic positioning operation, a live cargo carrier, or a fish farm.

3. A system according to claim 1 or claim 2, wherein the consumers comprise at least one of thrusters, propulsion units, or pumps.

4. A system according to any preceding claim, wherein the converter comprises an AC to DC to AC converter.

5. A system according to any preceding claim, wherein the converter comprises a plurality of connector arms, each arm connectable to a different switchboard.

6. A system according to claim 5, wherein the connector arm comprises a filter and an AC to DC converter.

7. A system according to claim 5 or claim 6, wherein the connector arms are coupled to a dc link in the converter.

8. A system according to claim 7, wherein each consumer on the dc link of the converter is connected via a fuse.

9. A system according to any preceding claim, wherein the power source comprises a prime mover.

10. A system according to any preceding claim, wherein the system further comprises an additional consumer connected to the dc link of the converter.

11. A method of controlling a a safety critical equipment power supply comprising two or more switchboards configured to be connected to one another by a bus tie breaker, normally open during safety critical operation, the method comprising connecting a power source to one switchboard of the vessel; coupling the switchboards together via one or more converters; connecting an energy storage device to a dc link of the converter; during safety critical operation, supplying power from the power source on the one switchboard directly to one or more consumers connected to that switchboard; through the converter, supplying energy to one or more consumers connected to the other switchboards; supplying power from the power source to the energy storage unit; and, in the event of a fault on one of the switchboards, disconnecting that switchboard from the converter.

12. A method according to claim 11, further comprising, in the event of a fault in the switchboard to which the power source is connected, after disconnecting the switchboard from the converter, supplying power to consumers on the second switchboard from the energy storage unit.

13. A method according to claim 11, further comprising, in the event of a fault in a switchboard to which the power supply is not directly connected, after disconnecting the switchboard from the converter, terminating the supply of power to the energy storage unit.

14. A method according to claim 11, further comprising, in the event of a fault in the converter, disconnecting the switchboards from the converter.

15. A method of operating a vessel, the vessel comprising an electric propulsion system comprising two or more switchboards; one or more converters including an energy storage unit; at least one power source; and a plurality of thrusters; wherein each of the thrusters is connected to a switchboard; wherein the at least one power source is connected to a switchboard; and wherein the two or more switchboards are connected together via the one or more converters; the method comprising supplying power from the at least one power source to its switchboard and from its switchboard directly, or via the converter, to thrusters; monitoring the system for a fault; in the event of a fault in the system, disconnecting a switchboard, or converter, associated with the fault; and maintaining the supply to the remaining switchboard from the power source, or the energy storage unit.
